# EUROPÄISCHE PATENTANMELDUNG

(11) **EP 1 985 663 A1**
(43) Veröffentlichungstag der Anmeldung: **29.10.2008**
(21) Anmeldenummer: 08154994.1
(22) Anmeldetag: 23.04.2008
(51) Int. Cl.: C08L 33/12, C08L 25/12, C08L 51/00

(54) **Formkörper mit temperaturabhängiger Transparenz**

(30) Priorität: 24.04.2007 EP 07106819
(71) Anmelder: BASF SE, 67056 Ludwigshafen (DE)
(72) Erfinder: DeArmitt, Chris, Hattiesburg, 39402 Mississippi (US); Mc Kee, Graham Edmund, 67433, Neustadt (DE)

(57) **Zusammenfassung**

Die Erfindung betrifft Formkörper, herstellbar aus einer Kunststoffmischung, wobei die Kunststoffmischung mindestens eine Thermoplastmatrix und mindestens eine teilchenförmige Kautschukkomponente umfasst und der Brechungsindex der Thermoplastmatrix R_{M} und der Brechungsindex der teilchenförmigen Kautschukkomponente R_{K} jeweils mit steigender Temperatur abnehmen,
wobei erfindungswesentlich ist, dass bei 20°C die Differenz ΔR²⁰ zwischen dem Brechungsindex der teilchenförmigen Kautschukkomponente R_{K}²⁰ und dem Brechungsindex der Thermoplastmatrix R_{M}²⁰ im Bereich von 0,003 bis 0,3 liegt, und bei einer Temperatur T, die entweder größer oder kleiner als 20°C ist, die Differenz ΔR^{T} zwischen dem Brechungsindex der teilchenförmigen Kautschukkomponente R_{K}^{T} und dem Brechungsindex der Thermoplastmatrix R_{M}^{T} im Bereich von -0,002 bis 0,002 liegt,
wobei die Brechungsindices jeweils gemäß der in der Beschreibung genannten Methode bestimmt werden,
sowie Kunststoffmischungen zur Herstellung dieser Formkörper, Verfahren zur Herstellung der erfindungsgemäßen Formkörper, die Verwendung dieser Formkörper sowie aus diesen Formkörpern erhältliche Bauteile und Sichtfenster für Öfen, Herde, Geschirrspüler, Gefrierschränke und Staubsauger.

## Beschreibung

Die Erfindung betrifft Formkörper, herstellbar aus einer Kunststoffmischung, wobei die Kunststoffmischung mindestens eine Thermoplastmatrix und mindestens eine teilchenförmige Kautschukkomponente umfasst und der Brechungsindex der Thermoplastmatrix R_{M} und der Brechungsindex der teilchenförmigen Kautschukkomponente R_{K} jeweils mit steigender Temperatur abnehmen.

Weiterhin betrifft die vorliegende Erfindung Kunststoffmischungen zur Herstellung dieser Formkörper, Verfahren zur Herstellung der erfindungsgemäßen Formkörper, die Verwendung dieser Formkörper sowie aus diesen Formkörpern erhältliche Bauteile und Sichtfenster für Öfen, Herde, Geschirrspüler, Gefrierschränke und Staubsauger.

Aus dem Stand der Technik sind diverse Kunststoffmischungen bekannt, die opak oder transluzent sind. Diese Kunststoffmischungen sind für Licht durchlässig, streuen dieses jedoch. Gegenstände, die durch opake oder transluzente Kunststoffplatten, -scheiben oder -fenster betrachtet werden, sind nicht klar, sondern nur verschwommen oder gar nicht mehr erkennbar.
Andere Kunststoffmischungen, die transparent sind, sind ebenfalls bekannt. Aufgrund der sehr geringen Lichtstreuung solcher Materialien sind Gegenstände, die durch transparente Kunststoffplatten, -scheiben oder -fenster betrachtet werden, klar erkennbar. WO 97/08241 offenbart beispielsweise solche Formmassen, wobei diese aus einem harten Methylmethacrylat-Polymerisat, einem harten Vinylaromat-Vinylcyanid-Polymerisat und einem weichen Pfropfcopolymerisat umfassend einen kautschukelastischen Pfropfkern, eine erste Pfropfhülle aus einem Vinylaromat-Alkylmethacrylat-Polymerisat und eine zweite Pfropfhülle aus einem Alkyl(meth)acrylat-Polymerisat, aufgebaut sind.

Für bestimmte Anwendungen ist es jedoch wünschenswert, Kunststoffe bzw. Formkörper aus Kunststoff einzusetzen, die bei einer bestimmten Temperatur opak bzw. transluzent sind, bei einer anderen, d.h. bei einer erhöhten oder erniedrigten, Temperatur jedoch ein transparentes Erscheinungsbild haben. So sind beispielsweise Sichtfenster für Herde oder Geschirrspüler wünschenswert, die bei Raumtemperatur opak sind und somit den Einblick in das möglicherweise verschmutzte Innere dieser Geräte verwehren, bei erhöhten Temperaturen während des Betriebs dieser Geräte aber transparent werden und somit eine optische Kontrolle des Back- oder Spülvorgangs ermöglichen. Ebenfalls wünschenswert sind Sichtfenster für beispielsweise Gefrierschränke, die bei Raumtemperatur opak, bei Gefriertemperatur von beispielsweise -20°C aber transparent sind.

Der vorliegenden Erfindung lag daher die Aufgabe zugrunde, Formkörper und Kunststoffmischungen zur Verfügung zu stellen, die bei Raumtemperatur opak oder transluzent, bei einer anderen Temperatur, d.h. gegenüber Raumtemperatur erhöhter oder erniedrigter Temperatur, jedoch transparent erscheinen.

Demgemäß wurden die eingangs definierten Formkörper gefunden, wobei erfindungswesentlich ist, dass bei 20°C die Differenz ΔR²⁰ zwischen dem Brechungsindex der teilchenförmigen Kautschukkomponente R_{K}²⁰ und dem Brechungsindex der Thermoplastmatrix R_{M}²⁰ im Bereich von 0,003 bis 0,3 liegt, und bei einer Temperatur T, die entweder größer oder kleiner als 20°C ist, die Differenz ΔR^{T} zwischen dem Brechungsindex der teilchenförmigen Kautschukkomponente R_{K}^{T} und dem Brechungsindex der Thermoplastmatrix R_{M}^{T} im Bereich von -0,002 bis 0,002 liegt, wobei die Brechungsindices jeweils gemäß der im folgenden genannten Methode bestimmt werden.

Des weiteren wurden Kunststoffmischungen zur Herstellung dieser Formkörper, Verfahren zur Herstellung der erfindungsgemäßen Formkörper, die Verwendung dieser Formkörper sowie aus diesen Formkörpern erhältliche Bauteile und Sichtfenster für Öfen, Herde, Geschirrspüler, Gefrierschränke und Staubsauger gefunden.

Die erfindungsgemäßen Formkörper, Kunststoffmischungen, Verfahren, Verwendungen, Bauteile und Sichtfenster für Öfen, Herde, Geschirrspüler, Gefrierschränke und Staubsauger werden im folgenden beschrieben.

Die erfindungsgemäßen Formkörper sind aus einer Kunststoffmischung herstellbar, welche mindestens eine Thermoplastmatrix und mindestens eine teilchenförmige Kautschukkomponente umfasst, wobei der Brechungsindex der Thermoplastmatrix R_{M} und der Brechungsindex der teilchenförmigen Kautschukkomponente R_{K} jeweils mit steigender Temperatur abnehmen. Erfindungswesentlich ist, dass bei 20°C die Differenz ΔR²⁰ zwischen dem Brechungsindex der teilchenförmigen Kautschukkomponente R_{K}²⁰ und dem Brechungsindex der Thermoplastmatrix R_{M}²⁰ im Bereich von 0,003 bis 0,3, bevorzugt im Bereich von 0,003 bis 0,05, besonders bevorzugt im Bereich von 0,004 bis 0,04, liegt, und bei einer Temperatur T, die entweder größer als 20°C ist, bevorzugt im Bereich von 40°C bis 120°C, besonders bevorzugt im Bereich von 45°C bis 100°C, und ganz besonders bevorzugt im Bereich von 50°C bis 80°C liegt, oder die kleiner als 20°C ist, bevorzugt im Bereich von -60°C bis 0°C, besonders bevorzugt im Bereich von -40°C bis -5°C, und ganz besonders bevorzugt im Bereich von -30°C bis -10°C liegt, die Differenz ΔR^{T} zwischen dem Brechungsindex der teilchenförmigen Kautschukkomponente R_{K}^{T} und dem Brechungsindex der Thermoplastmatrix R_{M}^{T} im Bereich von -0,002 bis 0,002, bevorzugt im Bereich von -0,0015 bis 0,0015, besonders bevorzugt im Bereich von -0,001 bis 0,001, liegt.

Die Brechungsindices R_{M} und R_{K} sind gemäß vorliegender Erfindung an Folien zu bestimmen, die aus den jeweiligen Thermoplastmatrices bzw. teilchenförmigen Kautschukkomponenten in einer IWK-Presse bei 200°C und einem Druck von 3 - 5 bar 2 min vorgepresst und abschließend bei 200°C und 200 bar 3 min nachgepresst wurden. Die Bestimmungen von R_{M} und R_{K} sind bei 20°C (R_{M}²⁰ und R_{K}²⁰) bzw. Temperatur T (R_{M}^{T} und R_{K}^{T}) mit einem Abbé-Refraktometer nach der Methode zur Messung der Brechungsindizes bei festen Körpern durchzuführen (s. Ullmanns Encyklopädie der technischen Chemie, Band 2/1, S. 486, Herausgeber E. Foerst; Urban & Schwarzenberg, München-Berlin 1961).

Die mittlere Teilchengröße D₅₀ der teilchenförmigen Kautschukkomponente liegt üblicherweise im Bereich von 30 bis 500 nm, bevorzugt 50 bis 400 nm, besonders bevorzugt 100 bis 350 nm. Liegen die mittleren Teilchengrößen D₅₀ unter den genannten Werten, ist das Streuvermögen der Kautschukteilchen bei Raumtemperatur meist zu gering; liegen die mittleren Teilchengrößen D₅₀ über den genannten Werten, sind in der Regel nachteilige Effekte bezüglich mechanischer Eigenschaften bzw. der Oberflächenqualität zu beobachten. Die Teilchengrößenverteilung kann monomodal, bimodal oder polymodal sein.
Die mittlere Teilchengröße und die Teilchengrößenverteilung der teilchenförmigen Kautschukkomponente werden gemäß vorliegender Erfindung aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus lässt sich entnehmen, wie viel Gewichtsprozent der Teilchen einen Durchmesser gleich oder kleiner einer bestimmten Größe haben. Der mittlere Teilchendurchmesser, der auch als D₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem D₅₀-Wert entspricht. Ebenso haben dann 50 Gew.-% der Teilchen einen größeren Durchmesser als der D₅₀-Wert.

Die Kunststoffmischung zur Herstellung der erfindungsgemäßen Formkörper umfasst in der Regel 40 bis 99 Gew.-%, bevorzugt 55 bis 90 Gew.-%, besonders bevorzugt 60 bis 85 Gew.-%, Thermoplastmatrix und 1 bis 60 Gew.-%, bevorzugt 10 bis 45 Gew.-%, besonders bevorzugt 15 bis 40 Gew.-%, teilchenförmiger Kautschukkomponente, wobei die Gew.-% jeweils auf das Gesamtgewicht der Thermoplastmatrix und der Kautschukkomponente bezogen sind und zusammen 100 Gew.-% ergeben. Liegt der Anteil teilchenförmiger Kautschukkomponente unterhalb der genannten Werte, ist in der Regel keine befriedigende Streuwirkung zu beobachten; liegt der Anteil teilchenförmiger Kautschukkomponente oberhalb der genannten Werte, beeinträchtigt dies üblicherweise die mechanischen Eigenschaften und die Oberflächeneigenschaften.

Als Thermoplastmatrix kommen im Rahmen der genannten erfindungswesentlichen Merkmale grundsätzlich alle dem Fachmann bekannten und im Stand der Technik beschriebenen thermoplastisch verarbeitbaren Polymere in Betracht. Bevorzugte Polymere zur Ausbildung der Thermoplastmatrix sind Poly(meth)acrylate (PMMA) und deren Copolymere, Polymere auf Basis von Styrol oder α-Methylstyrol wie Polystyrol und Styrol-Acrylnitril-Copolymere (SAN), insbesondere SAN und SAN-PMMA-Mischungen.

Als teilchenförmige Kautschukkomponente kommen im Rahmen der genannten erfindungswesentlichen Merkmale grundsätzlich alle dem Fachmann bekannten und im Stand der Technik beschriebenen teilchenförmigen Kautschuke in Betracht. Bevorzugte teilchenförmige Kautschukkomponenten sind dem Fachmann bekannte und in der Literatur beschriebene Kautschuke auf Basis von Butadien oder vernetzten Acrylaten, insbesondere solche umfassend einen Pfropfkern und ein oder mehrere Pfropfhüllen.

Im Rahmen der genannten erfindungswesentlichen Merkmale bevorzugte Kunststoffmischungen sind butadienkautschukmodifiziertes SAN (sogenannte "AcrylnitrilButadien-Styrol-Copolymere", ABS), acrylatkautschukmodifiziertes SAN (sogenannte "Acrylat-Styrol-Acrylnitril-Copolymere", ASA) und butadienkautschukmodifiziertes PMMA-SAN (sogenannte "(Meth)acrylat-Acrylnitril-Butadien-Styrol-Copolymere", MABS).

Selbstverständlich können die erfindungsgemäßen Kunststoffmischungen weitere dem Fachmann bekannte Polymerkomponenten und/oder kunststoffübliche Zusatzstoffe enthalten, sofern die Opazität bzw. Transluzenz bei Raumtemperatur und die Transparenz bei erhöhten Temperaturen nicht wesentlich beeinträchtigt werden. Als übliche Zusatzstoffe kommen beispielsweise alle solchen Substanzen in Betracht, die sich in den Kunststoffmischungen gut lösen, beziehungsweise mit diesen gut mischbar sind. Geeignete Zusatzstoffe sind u.a. Farbstoffe, Stabilisatoren, Schmiermittel und Antistatika. Solche Zusatzstoffe und deren Herstellung sind dem Fachmann bekannt und in der Literatur beschrieben.

Im Rahmen der genannten erfindungswesentlichen Merkmale insbesondere bevorzugte Kunststoffmischungen umfassen (zur detaillierten Beschreibung der folgenden Komponenten (A), (B), (C) und (D) wird ausdrücklich auf WO 2005/059029 A1 verwiesen):
(A) 20 bis 80 Gew.-%, vorzugsweise von 25 bis 75 Gew.-%, jeweils bezogen auf die Summe der Komponenten (A), (B) und (C), eines Methylmethacrylat-Polymerisates, erhältlich durch Polymerisation einer Mischung, bestehend aus
   (A1) 90 bis 100 Gew.-%, vorzugsweise von 92 bis 98 Gew.-%, jeweils bezogen auf (A), Methylmethacrylat, und
   (A2) 0 bis 10 Gew.-%, vorzugsweise von 2 bis 8 Gew.-%, jeweils bezogen auf (A), eines C₁-C₈-Alkylesters der Acrylsäure
(B) 2 bis 79 Gew.-%, vorzugsweise von 5 bis 65 Gew.-%, jeweils bezogen auf die Summe der Komponenten (A), (B) und (C), eines Copolymerisates, erhältlich durch Polymerisation einer Mischung, bestehend aus
   (B1) 75 bis 88 Gew.-%, vorzugsweise von 79 bis 85 Gew.-%, jeweils bezogen auf (B), eines vinylaromatischen Monomeren und
   (B2) 12 bis 25 Gew.-%, vorzugsweise von 15 bis 21 Gew.-%, jeweils bezogen auf (B), eines Vinylcyanids
   und
(C) 1 bis 60 Gew.-%, vorzugsweise von 10 bis 45 Gew.-%, jeweils bezogen auf die Summe der Komponenten (A), (B) und (C), eines Pfropfcopolymerisates, erhältlich aus
   (C1) 60 bis 90 Gew.-%, vorzugsweise von 65 bis 80 Gew.-%, jeweils bezogen auf (C), eines Kerns, erhältlich durch Polymerisation eines Monomerengemisches, bestehend aus
      (C11) 60 bis 90 Gew.-%, vorzugsweise von 65 bis 85 Gew.-%, jeweils bezogen auf (C1), eines 1,3-Diens und
      (C12) 10 bis 40 Gew.-%, vorzugsweise von 15 bis 35 Gew.-%, jeweils bezogen auf (C1), eines vinylaromatischen Monomeren
      und
   (C2) 10 bis 40 Gew.-%, vorzugsweise von 20 bis 35 Gew.-%, jeweils bezogen auf (C), einer oder mehrerer Pfropfhüllen, erhältlich durch Polymerisation eines Monomerengemisches, bestehend aus
      (C21) 2 bis 60 Gew.-%, vorzugsweise von 5 bis 50 Gew.-%, jeweils bezogen auf (C2), eines vinylaromatischen Monomeren
      (C22) 40 bis 98 Gew.-%, vorzugsweise von 50 bis 95 Gew.-%, jeweils bezogen auf (C2), eines C₁-C₈-Alkylesters der Methacrylsäure,
      (C23) 0 bis 3 Gew.-%, vorzugsweise von 0 bis 2 Gew.-%, jeweils bezogen auf (C2), eines vernetzenden Monomeren und
      (C24) 0 bis 20 Gew.-%, vorzugsweise von 0 bis 15 Gew.-%, jeweils bezogen auf (C2), eines C₁-C₈-Alkylesters der Acrylsäure,
      und
(D) gegebenenfalls üblichen Zusatzstoffen in Mengen von 0 bis 20 Gew.-%, vorzugsweise von 0 bis 10 Gew.-%, jeweils bezogen auf die Summe der Komponenten (A), (B) und (C).

Die Herstellung der erfindungsgemäßen Kunststoffmischungen aus den Komponenten erfolgt nach dem Fachmann bekannten Verfahren, beispielsweise durch Mischen der Thermoplastmatrix und des teilchenförmigen Kautschuks in der Schmelze, mit dem Fachmann bekannten Vorrichtungen, vorzugsweise bei Temperaturen im Bereich von 200 bis 300°C, insbesondere bei 200 bis 280°C. Die Komponenten können in jeweils reiner Form den Mischvorrichtungen zugeführt werden. Es können aber auch einzelne Komponenten zuerst vorgemischt und anschließend mit den anderen Komponenten vermischt werden.

Aus den erfindungsgemäßen Kunststoffmischungen können nach dem Fachmann bekannten Verfahren, beispielsweise durch Extrudieren, Kalandrieren, Pressen oder Spritzgießen der Kunststoffmischung, die erfindungsgemäßen Formkörper hergestellt werden.

Bevorzugte erfindungsgemäße Formkörper sind Platten, insbesondere solche mit einer Dicke im Bereich von 0,1 bis 10 mm, bevorzugt 0,5 bis 5 mm, besonders bevorzugt 1 bis 3 mm.

Die erfindungsgemäßen Formkörper sind insbesondere zur Herstellung von Bauteilen mit temperaturabhängiger Transparenz geeignet. So eignen sich beispielsweise erfindungsgemäße Formkörper in Plattenform vorzugsweise zur Herstellung von Sichtfenstern, beispielsweise für Öfen, Herde, Geschirrspüler, Gefrierschränke, Staubsauger oder andere Geräte, die je nach Betriebszustand unterschiedliche Temperaturen besitzen. Bevorzugte Ausführungsformen von Sichtfenstern für Herde sind beispielsweise Verbundscheiben aus ein oder mehreren Glasscheiben, die als Hitzeschutz dem Herdinneren zugewandt sind, und einer Platte aus den erfindungsgemäßen Kunststoffmischungen, die die herdabgewandte Schicht der Verbundscheibe bildet; solche Verbundscheiben können als Zwischenschichten weitere wärmeabsorbierende, - reflektierende oder -dämmende Schichten, beispielsweise Gasschichten, aufweisen.

Die erfindungsgemäßen Formkörper und Kunststoffmischungen zeichnen sich dadurch aus, dass sie bei Raumtemperatur opak oder transluzent, bei einer anderen Temperatur, also gegenüber Raumtemperatur entweder erhöhter oder erniedrigter Temperatur, jedoch transparent erscheinen.

### Beispiele:

In den nachfolgenden erfindungsgemäßen Beispielen wurden jeweils Kunststoffmischungen und Formkörper hergestellt und folgende Eigenschaften ermittelt:
Brechungsindices R [dimensionslos]:
   Die Brechungsindices R_{M} und R_{K} wurden an Folien gemessen, die aus den jeweiligen Thermoplastmatrices bzw. teilchenförmigen Kautschukkomponenten in einer IWK-Presse bei 200°C und einem Druck von 3 - 5 bar 2 min vorgepresst und abschließend bei 200°C und 200 bar 3 min nachgepresst wurden. Die Messungen wurden bei 20°C (R_{M}²⁰ und R_{K}²⁰) bzw. Temperatur T (R_{M}^{T} und R_{K}^{T}) mit einem Abbe-Refraktometer nach der Methode zur Messung der Brechungsindizes bei festen Körpern durchgeführt (s. Ullmanns Encyklopädie der technischen Chemie, Band 2/1, S. 486, Herausgeber E. Foerst; Urban & Schwarzenberg, München-Berlin 1961).
Transparenz:
   Die Transparenz wurde durch Augenscheinnahme an spritzgegossenen Formkörpern in Scheibenform mit einer Dicke von 2 mm und einem Durchmesser von 6 cm bestimmt und entweder als "transparent" oder "opak" bewertet.
Teilchengröße D₅₀ [nm]:
   Die mittlere Teilchengröße und die Teilchengrößenverteilung der teilchenförmigen Kautschukkomponente wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden.
Einsatzstoffe:
   Als Komponente A-1 der Thermoplastmatrix wurde Lucryl^{®} G66, ein Copolymerisat aus Methylmethacrylat und Methylacrylat mit den folgenden Brechungsindices eingesetzt: 1,495 (bei -20°C), 1,491 (bei 20°C), 1,488 (bei 50°C), 1,484 (bei 80°C).

Als Komponente B-1 der Thermoplastmatrix wurde ein Copolymerisat aus 81 Gew.-% Styrol und 19 Gew.-% Acrylnitril mit einer Viskositätszahl VZ von 100 ml/g (bestimmt als 0,5 gew.-%-ige Lösung in Dimethylformamid bei 23°C nach DIN 53726) mit den folgenden Brechungsindices eingesetzt: 1,578 (bei -20°C), 1,574 (bei 20°C), 1,572 (bei 50°C), 1,568 (bei 80°C).

Als teilchenförmige Kautschukkomponente, Komponente C-1, wurde ein Pfropfkautschuk Kane Ace^{®} B28 der Kaneka Corp. eingesetzt, aufgebaut aus einem Pfropfkern aus Butadien und Styrol sowie einer Pfropfhülle aus Styrol und Methylmethacrylat. Die Brechungsindices dieser Komponente C-1 betrugen 1,544 (bei -20°C), 1,541 (bei 20°C), 1,530 (bei 50°C), 1,522 (bei 80°C).

Als teilchenförmige Kautschukkomponente, Komponente C-2, wurde ein durch Emulsionspolymerisation hergestellter Pfropfkautschuk eingesetzt, der einen Pfropfkern aus 40 Gew.-% Butadien und 60 Gew.-% Butylacrylat sowie eine Pfropfhülle aus 75 Gew.-% Styrol und 25 Gew.-% Acrylnitril enthielt, wobei der Gewichtsanteil des Pfropfkerns 75 Gew.-% und der Gewichtsanteil der Pfropfhülle 25 Gew.-% bezogen auf Komponente C-2 betrug. Die mittlere Teilchengröße D₅₀ des monodispersen Pfropfkautschuks C-2 betrug 80 nm, die Brechungsindices betrugen 1,511 (bei -20°C), 1,502 (bei 20°C), 1,490 (bei 50°C).

### Herstellung der Kunststoffmischungen und Formkörper:

Auf einem Zweischneckenextruder (ZSK30 der Fa. Werner & Pfleiderer) wurden die in Tabelle 1 angegebenen Gewichtsteile der Komponenten A, B und C bei 260°C schmelzevermischt und homogenisiert. Nach Granulierung wurden aus den so erhaltenen Kunststoffmischungen Formkörper gespritzt und geprüft. Die Prüfergebnisse werden ebenfalls in Tabelle 1 wiedergegeben (zur Ermittlung der in Tabelle 1 angegebenen Differenzen ΔR²⁰ und ΔR^{T} wurden die Brechungsindices der jeweiligen Kautschukkomponente C nach der obengenannten Methode bestimmt, ebenso wurden die Brechungsindices der jeweiligen Thermoplastmatrix an separat hergestellten Mischungen der genannten Gewichtsteile der Komponenten A und B nach der obengenannten Methode bestimmt, und anschließend die entsprechende Differenz berechnet).

**Tabelle 1:**

| Kunststoffmischung | 1 | 2 | 3 | 4 | 5 | 6 |
|---|---|---|---|---|---|---|
| | | | | | | |
| Einsatzstoffe | Gew.-teile | Gew.-teile | Gew.-teile | Gew.-teile | Gew.-teile | Gew.-teile |
| A-1 | 32 | 35,2 | 53,3 | 59,4 | 35,7 | 26,2 |
| B-1 | 32 | 28,8 | 10,7 | 4,6 | 34,3 | 37,8 |
| C-1 | 36 | 36 | - | - | 30 | 36 |
| C-2 | - | - | 36 | 36 | - | - |
| | | | | | | |

| Brechungsindices | | | | | | |
|---|---|---|---|---|---|---|
| ΔR²⁰ | 0,008 | 0,013 | 0,006 | 0,014 | 0,034 | 0,004 |
| ΔR^{T} bei T = -20°C | n. b. | n. b. | n. b. | n. b. | n. b. | 0,000 |
| ΔR^{T} bei T = 50°C | 0,000 | n. b. | -0,001 | n. b. | 0 | n. b. |
| ΔR^{T} bei T = 80°C | n. b. | 0,000 | n. b. | 0,000 | n. b. | n. b. |
| | | | | | | |

| Prüfergebnisse | | | | | | |
|---|---|---|---|---|---|---|
| Transparenz bei 20°C | opak | opak | opak | opak | opak | opak |
| Transparenz bei -20°C | n. b. | n. b. | n. b. | n. b. | n. b. | transparent |
| Transparenz bei 50°C | transparent | n. b. | transparent | n. b. | transparent | n. b. |
| Transparenz bei 80°C | n. b. | transparent | n. b. | transparent | n. b. | n. b. |

| | | | | | | |
|---|---|---|---|---|---|---|
| "n. b." bedeutet "nicht bestimmt" | | | | | | |

Die Beispiele belegen die ausgeprägte Opazität bei Raumtemperatur und Transparenz bei erhöhter oder erniedrigter Temperatur der erfindungsgemäßen Kunststoffmischungen und Formkörper.

## Patentansprüche

1. Formkörper, herstellbar aus einer Kunststoffmischung,
wobei die Kunststoffmischung mindestens eine Thermoplastmatrix und mindestens eine teilchenförmige Kautschukkomponente umfasst und
der Brechungsindex der Thermoplastmatrix R_{M} und der Brechungsindex der teilchenförmigen Kautschukkomponente R_{K} jeweils mit steigender Temperatur abnehmen,
**dadurch gekennzeichnet, dass**
bei 20°C die Differenz ΔR²⁰ zwischen dem Brechungsindex der teilchenförmigen Kautschukkomponente R_{K}²⁰ und dem Brechungsindex der Thermoplastmatrix R_{M}²⁰ im Bereich von 0,003 bis 0,3 liegt, und
bei einer Temperatur T, die entweder größer oder kleiner als 20°C ist, die Differenz ΔR^{T} zwischen dem Brechungsindex der teilchenförmigen Kautschukkomponente R_{K}^{T} und dem Brechungsindex der Thermoplastmatrix R_{M}^{T} im Bereich von -0,002 bis 0,002 liegt,
wobei die Brechungsindices jeweils gemäß der in der Beschreibung genannten Methode bestimmt werden.

2. Formkörper gemäß Anspruch 1, **dadurch gekennzeichnet, dass** die Temperatur T im Bereich von 40°C bis 120°C liegt.

3. Formkörper gemäß Anspruch 1, **dadurch gekennzeichnet, dass** die Temperatur T im Bereich von -60°C bis 0°C liegt.

4. Formkörper gemäß Ansprüchen 1 bis 3, **dadurch gekennzeichnet, dass** die mittlere Teilchengröße D₅₀ der Kautschukkomponente 30 bis 500 nm beträgt (bestimmt gemäß der in der Beschreibung genannten Methode).

5. Formkörper gemäß Ansprüchen 1 bis 4, **dadurch gekennzeichnet, dass** die Kunststoffmischung
40 bis 99 Gew.-% Thermoplastmatrix und
1 bis 60 Gew.-% teilchenförmiger Kautschukkomponente umfasst,
wobei die Gew.-% jeweils bezogen sind auf das Gesamtgewicht der Thermoplastmatrix und der Kautschukkomponente und zusammen 100 Gew.-% ergeben.

6. Formkörper gemäß Ansprüchen 1 bis 5, **dadurch gekennzeichnet, daß** die Kunststoffmischung umfasst
(A) 20 bis 80 Gew.-%, bezogen auf die Summe der Komponenten (A), (B) und (C) eines Methylmethacrylat-Polymerisates, erhältlich durch Polymerisation einer Mischung, bestehend aus
(A1) 90 bis 100 Gew.-%, bezogen auf (A), Methylmethacrylat,und
(A2) 0 bis 10 Gew.-%, bezogen auf (A), eines C₁-C₈-Alkylesters der Acrylsäure, und
(B) 2 bis 79 Gew.-%, bezogen auf die Summe der Komponenten (A), (B) und (C), eines Copolymerisates, erhältlich durch Polymerisation einer Mischung, bestehend aus
(B1) 75 bis 88 Gew.-%, bezogen auf (B), eines vinylaromatischen Monomeren und
(B2) 12 bis 25 Gew.-%, bezogen auf (B), eines Vinylcyanids
und
(C) 1 bis 60 Gew.-%, bezogen auf die Summe der Komponenten (A), (B) und (C), eines Pfropfcopolymerisates, erhältlich aus
(C1) 60 bis 90 Gew.-%, bezogen auf (C), eines Kerns, erhältlich durch Polymerisation eines Monomerengemisches, bestehend aus
(C11) 60 bis 90 Gew.-%, bezogen auf (C1), eines 1,3-Diens und
(C12) 10 bis 40 Gew.-% bezogen auf (C1), eines vinylaromatischen Monomeren
und
(C2) 10 bis 40 Gew.-%, bezogen auf (C), einer oder mehrerer Pfropfhüllen, erhältlich durch Polymerisation eines Monomerengemisches, bestehend aus
(C21) 2 bis 60 Gew.-%, bezogen auf (C2), eines vinylaromatischen Monomeren,
(C22) 40 bis 98 Gew.-%, bezogen auf (C2), eines C₁-C₈-Alkylesters der Methacrylsäure,
(C23) 0 bis 3 Gew.-%, bezogen auf (C2), eines vernetzenden Monomeren und
(C24) 0 bis 20 Gew.-%, bezogen auf (C2), eines C₁-C₈-Alkylesters der Acrylsäure,
und
(D) gegebenenfalls üblichen Zusatzstoffen in Mengen von bis zu 20 Gew.-%, bezogen auf die Summe der Komponenten (A), (B) und (C).

7. Formkörper gemäß Ansprüchen 1 bis 6, **dadurch gekennzeichnet, dass** der Formkörper eine Platte mit einer Dicke im Bereich von 0,1 bis 10 mm ist.

8. Kunststoffmischung zur Herstellung von Formkörpern nach einem der Ansprüche 1 bis 7, umfassend mindestens eine Thermoplastmatrix und mindestens eine teilchenförmige Kautschukkomponente, wobei der Brechungsindex der Thermoplastmatrix R_{M} und der Brechungsindex der teilchenförmigen Kautschukkomponente R_{K} jeweils mit steigender Temperatur abnehmen, bei 20°C die Differenz ΔR²⁰ zwischen dem Brechungsindex der teilchenförmigen Kautschukkomponente R_{K}²⁰ und dem Brechungsindex der Thermoplastmatrix R_{M}²⁰ im Bereich von 0,003 bis 0,3 liegt, und bei einer Temperatur T, die entweder größer oder kleiner als 20°C ist, die Differenz ΔR^{T} zwischen dem Brechungsindex der teilchenförmigen Kautschukkomponente R_{K}^{T} und dem Brechungsindex der Thermoplastmatrix R_{M}^{T} im Bereich von -0,002 bis 0,002 liegt (wobei die Brechungsindices jeweils gemäß der in der Beschreibung genannten Methode bestimmt werden).

9. Verfahren zur Herstellung von Formkörpern nach einem der Ansprüche 1 bis 7, durch Schmelzevermischung der Thermoplastmatrix, des teilchenförmigen Kautschuks und gegebenenfalls weiterer Komponenten der Kunststoffmischung und anschließendes Extrudieren, Kalandrieren, Pressen oder Spritzgießen der Kunststoffmischung.

10. Verwendung von Formkörpern nach einem der Ansprüche 1 bis 7, als Bauteile mit temperaturabhängiger Transparenz.

11. Bauteile mit temperaturabhängiger Transparenz, umfassend Formkörper nach einem der Ansprüche 1 bis 7.

12. Verwendung von Formkörpern nach Anspruch 7 als Sichtfenster für Öfen, Herde, Geschirrspüler, Gefrierschränke oder Staubsauger.

13. Sichtfenster für Öfen, Herde, Geschirrspüler, Gefrierschränke oder Staubsauger umfassend Formkörper nach Anspruch 7.
